# EUROPÄISCHE PATENTSCHRIFT

(11) **EP 0 521 920 B1**
(45) Veröffentlichungstag und Bekanntmachung des Hinweises auf die Patenterteilung: **21.12.1994**
(21) Anmeldenummer: 91906191.1
(22) Anmeldetag: 07.03.1991
(51) Int. Cl.: C09D 5/02, C09D 7/12, C08K 5/06, C04B 41/46

(54) **TIEFENWIRKSAME GRUNDIERUNG**
DEEP ACTING PRIMER
COUCHE DE FOND A EFFET DE PENETRATION

(30) Priorität: 17.03.1990 DE 4008699
(43) Veröffentlichungstag der Anmeldung: 13.01.1993
(73) Patentinhaber: Henkel Kommanditgesellschaft auf Aktien, 40191 Düsseldorf (DE)
(72) Erfinder: HOFFMANN, Heinz-Peter, D-4000 Düsseldorf 1 (DE); SIPMANN, Sabine, D-4000 Düsseldorf 13 (DE)
(86) Internationale Anmeldenummer: EP9100432
(87) Internationale Veröffentlichungsnummer: WO9114742

(56) Entgegenhaltungen:
- EP-A- 0 038 426
- DE-A-26 273 20
- FR-A- 2 202 126

## Beschreibung

Die Erfindung betrifft eine tiefenwirksame Grundierung mit oberflächenverfestigenden Eigenschaften auf Basis feinteiliger wäßriger Polymerdispersionen.

Das Grundieren von Untergründen vor Anstrich-, Tapezier- und/oder Klebearbeiten ist eine dem Fachmann geläufige Tätigkeit. Diese wird insbesondere dann durchgeführt, wenn es gilt, sandende und kreidende Putzoberflächen zu festigen. Auch Rückstände wasserquellbarer Mischbinder-, Leim- und Kalkfarbenanstriche können dadurch gefestigt werden. Desweiteren ist eine Grundierung bei stark saugenden Putzuntergründen, gespachtelten Flächen, Gipszwischenwand- und Gipskartonplatten vor den genannten Anstrich- und/oder Tapezierarbeiten empfehlenswert.

Bekannt sind bislang wasserbasierende Grundierungsanstrichstoffe auf Basis kolloidal verteilter Kunstharze. Diese sind üblicherweise so ausgerüstet, daß die enthaltenen dispergierten Polymerteilchen eine geringere Teilchengröße als übliche Polymerdispersionen aufweisen, damit die Teilchen leichter in den Untergrund eindringen können. Trotzdem ist die Tiefenwirkung herkömmlicher Grundierungen nicht befriedigend, da die Eindringtiefe üblicherweise 1 bis 2 mm nicht überschreitet.

Zur besseren Benetzbarkeit des Untergrundes durch die Grundierung sind dieser gegebenenfalls Netzmittel beigefügt. In diesem Zusammenhang sind als solche Fettalkohol-Ethoxylat/Propoxylat-Mischprodukte bekannt.

Desweiteren sind dem Fachmann sogenannte Wechselgrundierungen bekannt. Es handelt sich dabei um wasserverdünnbare Paraffinemulsionen zur Anwendung auf fast allen tapezierfähigen Untergründen vor dem Tapezieren. Durch Bestreichen mit dem Wechselgrund wird der Untergrund zumindest partiell dehäsiv ausgestattet. Dadurch wird ein späteres Entfernen der aufgebrachten Tapeten erleichtert.

Eine Kombination von oberflächenverfestigenden, tiefenwirksamen Grundierungen und sogenannten Wechselgrundierungen ist bislang nicht bekannt.

Aufgabe der Erfindung ist es, Grundierungen mit deutlich verbesserter Tiefenwirkung bereitzustellen, die auch verbesserte oberflächenverfestigende Eigenschaften aufweist. Darüber hinaus ist es eine weitere Aufgabe der Erfindung, Grundierungen zu realisieren, die neben den bereits genannten Verbesserungen gewünschtenfalls auch geeignet sind, die zu behandelnden Untergründe zu dehäsivieren.

Gelöst wurde die erfindungsgemäße Aufgabe durch eine tiefenwirksame Grundierung mit oberflächenverfestigenden Eigenschaften auf Basis feinteiliger wäßriger Polymerdispersionen, dadurch gekennzeichnet, daß Alkoholethoxylate mit 12 bis 20 C-Atomen in dem vom Alkohol gebildeten Molekülteil und einem mittleren Ethoxylierungsgrad von 7 bis 120 sowie gewünschtenfalls dehäsivierende Zusätze enthalten sind.

Der Zusatz von bestimmten Alkoholethoxylaten zu Grundierungen, die aus an und für sich bekannten Rohstoffen bestehen, führt nicht nur zu einer deutlichen Verbesserung der Tiefenwirkung, sondern auch zu einer Verbesserung der Verfestigung der Untergrundoberfläche. Daß mit derartigen Alkoholethoxylaten eine Verbesserung der genannten Eigenschaften erreicht wird, war nicht zu erwarten und ist insofern überraschend, da der Einsatz von Fettalkohol-Ethoxylat/Propoxylat-Mischprodukten als Netzmittel für Grundierungen bereits bekannt ist. Es handelt sich dabei z.B. um Produkte, die aus einem 12 bis 14 C-Atome enthaltenden Alkohol bestehen, der im Mittel mit 5 mol Ethylenoxid und 4 mol Propylenoxid umgesetzt wurde.

Die genannten Verbesserungen sind jedoch nicht mit allen bekannten oder denkbaren Alkoholethoxylaten zu erreichen. Vielmehr sind die erfindungsgemäß einsetzbaren Alkoholethoxylate theoretisch oder tatsächlich Umsetzungsprodukte von Alkoholen, die 12 bis 20 C-Atome enthalten, mit einer solchen Menge Ethylenoxid, daß sich ein mittlerer Ethoxylierungsgrad von 7 bis 120 ergibt. Mit einem Zusatz an diesen Substanzen können Grundierungen formuliert werden, die eine Tiefenwirkung entfalten, die um ein Vielfaches höher liegen kann als bei bislang bekannten Grundierungen.

Darüber hinaus kann die erfindungsgemäße Grundierung gewünschtenfalls dehäsivierende Zusätze enthalten. Eine Kombination bislang bekannter tiefenwirksamer Grundierungen und Wechselgrundierungen ist bisher nicht bekannt und wäre auch nur schwer oder gar nicht realisierbar gewesen, da Systeme aus feinteiligen Polymerdispersionen mit Emulsionen dehäsivierender Stoffe schwer oder gar nicht zu stabilisieren sind und zum Entmischen in mehrere Phasen neigen. Dem könnte zwar durch den Zusatz relativ großer Mengen Verdickungsmittel zumindest mit mäßigem Erfolg entgegengewirkt werden, jedoch leiden dadurch die anderen erwünschten Eigenschaften, bzw. gehen fast gänzlich verloren wie z.B. die Tiefenwirkung.

Die in den erfindungsgemäßen Grundierungen enthaltenen Alkoholethoxylate sind sehr gute Emulgatoren, so daß stabile Mischungen, bei denen Polymerdispersionen und dehäsive Zusätze -letztere z.B. als Emulsion - vorliegen, problemlos möglich sind.

Die genannten erwünschten Eigenschaften, vor allem die Tiefenwirksamkeit, lassen sich insbesondere dann erzielen, wenn in der Grundierung 5 bis 80 Gew.-%, vorzugsweise 10 bis 30 Gew.-%, Alkoholethoxylate, jeweils bezogen auf den Festkörpergehalt der Grundierung, enthalten sind.

Die Alkoholethoxylate - auch als Alkylpolyethylenglykolether bezeichnet - lassen sich durch die allgemeine Strukturformel RO(CH₂CH₂O)ₓH wiedergeben. In einer besonderen Ausführungsform weist der vom Alkohol gebildete Molekülteil R eine lineare Struktur auf. Als besonders günstig hat es sich erwiesen, wenn dieser Molekülteil darüber hinaus gesättigt ist. Diese letztgenannte bevorzugte Ausführungsform ist insbesondere dann geeignet, wenn der vom Alkohol gebildete Molekülteil eine geradzahlige Anzahl von C-Atomen aufweist. Beste Ergebnisse zeigen entsprechende Verbindungen mit 16 und/oder 18 C-Atomen. Besonders geeignet sind also Alkylpolyethylenglykolether der obengenannten Formel, bei denen der Alkylrest der von einem gesättigten linearen C₁₆/C₁₈-Fettalkohol stammt.

Der Ethoxylierungsgrad entspricht der Variablen x in der obengenannten Formel. Bevorzugt sind die vorstehend näher bezeichneten Verbindungen mit einem mittleren Ethoxylierungsgrad von 10 bis 100. Eine besondere Ausführungsform bevorzugt Verbindungen, bei denen die Variable x in der genannten Formel im Mittel im Bereich zwischen 20 und 80 liegt.

Handelt es sich bei den Alkoholethoxylaten um Verbindungen, die bei Raumtemperatur, also bis mindestens 25 °C fest sind, so können sie einen Teil zur Verfestigung des behandelten Untergrundes beitragen. Derartige Verbindungen sind besonders geeignet, jedoch werden solche bevorzugt, die bei 30 °C oder darüber im festen Aggregatzustand vorliegen. So ist z.B. ein Alkoholethoxylat, bei dem R für einen gesättigten, linearen C₁₆/C₁₈-Fettalkohol steht und x im Mittel 11 beträgt, eine im Sinne der Erfindung geeignete Substanz, die sich bei Raumtemperatur in einem weichwachsähnlichen Zustand befindet. Besser geeignet und somit bevorzugt sind analoge Substanzen, bei denen der Ethoxylierungsgrad z.B. 50 oder 80 beträgt, da diese bei Raumtemperatur nicht mehr weichwachsähnlich sondern fest sind.

Die erfindungsgemäß geeigneten Alkoholethoxylate führen nicht nur zu einer Verbesserung der Tiefenwirksamkeit und/oder Oberflächenverfestigung der erfindungsgemäßen Grundierung sondern zeigen auch sehr gute emulgierende Eigenschaften. Es ist daher möglich, gewünschtenfalls dehäsivierende Zusätze in die Grundierung einzuarbeiten. Eine bevorzugte Ausführungsform enthält Paraffine, Silikone und/oder natürliche Fette. Derartige "fette" Stoffe oder Öle sind dem Fachmann bekannt, ebenso ihre dehäsivierende Wirkung. So können beispielsweise Fettsäuren, wie die Ölsäure, auch in Form ihrer Alkali- oder Ammoniumsalze - also auch als Seifen -, eingesetzt werden. Als besonders geeignet haben sich Paraffine erwiesen, von denen im Prinzip alle handelsüblichen Produkte erfindungsgemäß verwendbar sind, z.B. solche, deren Erstarrungspunkt bei ca. 40 °C liegt und deren Viskosität bei ca 100 °C bei 2 bis 2,5 centiStokes liegt.

Um einen ausreichenden dehäsivierenden Effekt auf dem zu behandelnden Untergrund zu erreichen, wird der Fachmann Grundierungen einsetzen, die nicht weniger als 10 Gew.-% dehäsivierende Zusätze enthalten, wobei die Prozentangabe sich auf die nicht-wäßrigen Anteile der Grundierung bezieht. Um die anderen erwünschten Eigenschaften der Grundierung nicht übermäßig negativ zu beeinflussen, wird der Fachmann keine Grundierungen verwenden, die mehr als 60 Gew.-% dehäsivierende Zusätze enthalten. Ein bevorzugter Anteil an diesen Zusätzen liegt also im Bereich von 10 bis 60 Gew.-%, bezogen auf die nicht-wäßrigen Anteile.

Eine besonders gute Verfestigung des behandelten Untergrundes mit der erfindungsgemäßen Grundierung ist dann zu erreichen, wenn die enthaltenen dispergierten Polymerteilchen beim Trocknen miteinander verfilmen. Es ist daher bevorzugt, daß die Grundierungen dispergierte Polymerteilchen enthalten, die zur Filmbildung befähigt sind. Unter Filmbildung wird hier das Zusammenfließen, bzw. Verschmelzen von Polymerteilchen unter Ausbildung eines Films verstanden. Die Mindesttemperatur bei der dies erfolgt, wird Filmbildungstemperatur genannt.

Die im Sinne der Erfindung verwendbaren Polymerdispersionen, oft synonym als Polymeremulsionen bezeichnet, sind dem Fachmann bekannt und finden auch vielfach als Klebstoffe Verwendung wie im Ullmann, Encyclopädie der technischen Chemie, 4. Auflage, Band 14, Verlag Chemie, Weinheim/Bergstraße 1974, Seite 241-242 beschrieben. Die Herstellung derartiger Polymerisate ist dem Fachmann als Emulsionspolymerisation bekannt und sind u.a. im obengenannten Ullmann, Band 19, Seite 132ff beschrieben.

Als Polymermaterial sind die Homo- und/oder Copolymeren auf Basis von Vinylester, Styrol oder (Meth)Acrylaten, insbesondere die Polymeren des Vinylacetats, von Bedeutung. Besonders geeignet sind die Homo-und/oder Copolymerisate auf (Meth)Acrylatbasis. Als geeignete (Meth)Acrylate seien beispielhaft Acrylsäure, Methacrylsäure sowie deren Salze und Ester genannt. Vorzugsweise enthält die Alkoholkomponente dieser Ester 1 bis 6 C-Atome. Geeignete Polymerisate können auch aus Mischungen von Methacrylaten mit anderen, dem Fachmann bekannten ethylenisch ungesättigten Monomeren polymerisiert sein, soweit diese polymerisierbar sind. Besonders geeignet sind Acrylsäureesterstyrolcopolymere. Bevorzugt werden im Sinne der Erfindung solche Copolymeren, die einen zumindestens überwiegenden Gewichtsanteil an (Meth)Acrylat aufweisen.

Desweiteren sind Polyurethane mit zur Salzbildung befähigten funktionellen Gruppen geeignet. Es handelt sich dabei um Polyurethanionomere kationischer oder anionischer Art. Besonders geeignet sind kationische Ionomere auf Basis sulfonatgruppen-und/oder carboxylgruppenenthaltenden Polyurethanharzen. Geeignete ionomere Polyurethane sind auch in den nicht vorveröffentlichten Anmeldungen DE 38 27 378 und DE 39 42 681 beschrieben. Bevorzugt sind also Grundierungen, die dispergierte Polymerteilchen enthalten, die zum zumindest überwiegenden Teil aus Homo- und/oder Copolymerisaten auf (Meth)Acrylatbasis und/oder Polyurethanen mit zur Salzbildung befähigten funktionellen Gruppen bestehen.

Für Grundierungen, die nach dem Trocknen Filme bilden, die wasserfest sein sollen, kann der Fachmann in der erfindungsgemäßen Grundierung solche Kunstharzdispersionen verwenden, die über reaktive Gruppen, vergleiche: J. Wiley & Sons, Encyclopedia of Polymer Science and Engineering, Band 8, New York 1987, Seite 662 - 663, oder über mehrbindige Metallsalze, wie in der DE 34 34 668 beschrieben, eine Vernetzung ermöglichen.

Im Sinne der Erfindung kann es sich als günstig erweisen, wenn die wäßrigen Polymerdispersionen dispergierte Teilchen verschiedener Größenordnung enthalten. Die Größe der Polymerteilchen läßt sich bekanntermaßen bei der Emulsionspolymerisation durch Variation geeigneter Emulsionsparameter beeinflussen. Üblicherweise liegt bei den meisten handelsüblichen Polymerdispersionen die Teilchengröße im Bereich von 0,1 bis 1 µm. Unter besonderen Emulsionspolymerisationsbedingungen lassen sich feinstteilige Dispersionen herstellen. Diese weisen eine Teilchengröße von 0,05 µm oder kleiner auf und werden gelegentlich auch als Hydrosole bezeichnet.

Gute Ergebnisse werden mit einer Kombination dieser Dispersionen unterschiedlicher Teilchengröße erreicht. Wenn auch der genaue Mechanismus nicht geklärt ist, so läßt sich doch vermuten, daß die kleineren Teilchen im Gegensatz zu den größeren Teilchen eher dazu in der Lage sind, durch Poren oder Kanäle tiefer in den Untergrund einzudringen und erst dort beim Verfilmen ihre verfestigende Wirkung entfalten. Im Sinne der Erfindung sind also Grundierungen mit wäßrigen Polymerdispersionen bevorzugt, die Teilchen verschiedener Größenordnung enthalten, wobei die größeren im Mittel bei 0,1 µm oder darüber und die kleineren im Mittel bei 0,05 µm oder darunter liegen. Beste Ergebnisse lassen sich erzielen, wenn zumindest 3 Gew.-% der dispergierten Polymerteilchen eine Größe von 0,05 µm und kleiner aufweisen. Diese Variante ist deshalb bevorzugt.

In einer besonderen Ausführungsform der erfindungsgemäßen Grundierung sind übliche Additive enthalten. Unter üblichen Additiven werden hier solche Zusätze für Grundierungen verstanden, wie sie dem Fachmann bekannt sind. Dies sind beispielsweise Lösungsmittel, Konservierungsmittel, Entschäumer, Farbstoffe und/oder Verdicker. Lösungsmittel können z.B. für spezielle Anwendungszwecke für problematische Untergründe enthalten sein. Im Sinne eines Verbraucher- und Umweltschutzes wird darauf jedoch, wenn möglich, weitestgehend verzichtet. Der Vorteil eines Gehalts an Konservierungsmitteln und/oder Entschäumern erklärt sich von selbst. Ein gewisser Anteil an Farbstoffen ist insbesondere dann enthalten, wenn es dem Anwender erleichtert werden soll, zu erkennen, an welchen Stellen der Untergrund schon mit Grundierung behandelt wurde. Als Verdickungsmittel kommen sowohl anorganische Verdickungsmittel z.B. Schichtsilikate wie Bentonite und Montmorillonite in Betracht und/oder organische Verdickungsmittel. Zu den letzteren zählen insbesondere solche auf Basis natürlicher Polymere, z.B. Polysaccharide wie Xanthan Gum. Auch Cellulose und Stärke sowie deren Derivate sind geeignet. Desweiteren können auch die bereits vorstehend beschriebenen ionischen Polyurethane und/oder Seifen verdickende Eigenschaften zeigen. In einer bevorzugten Ausführungsform sind nicht mehr als bis zu 10 Gew.-% Verdicker, bezogen auf da Festkörpergehalt der Grundierung, enthalten.

Entsprechend den obigen Ausführungen ist eine Grundierung bevorzugt, die die folgenden Bestandteile enthält:
15 - 30 Gewichtsteile Polyacrylat-Dispersion mit 50 Gew.-% Festkörpergehalt und einer Teilchengröße von etwa 0,1 µm,
0 - 10 Gewichtsteile Polyacrylat-Dispersion mit 38 Gew.-% Festkörpergehalt und einer Teilchengröße von etwa 0,03 µm,
0 - 30 Gewichtsteile anionische Polyurethan-Dispersion mit 5 Gew.-% Festkörpergehalt
8 - 30 Gewichtsteile Paraffin-Emulsion mit einem Gehalt von 42 Gew.-%,
2 - 20 Gewichtsteile C₁₆/C₁₈-Alkoholethoxylat mit einem mittleren Ethoxylierungsgrad zwischen 30 und 80,
0 - 5 Gewichtsteile Additive sowie mindestens
25 Gewichtsteile Wasser
Die obengenannten Gewichtsteile können sich entsprechend dem Festkörpergehalt ändern. Beispielsweise lassen sich statt 15 Gewichtsteilen einer 50 %-igen Dispersion auch 30 Gew.-Teile einer 25 %-igen Dispersion einsetzen. Allerdings ist damit dann auch eine entsprechende Änderung der Gewichtsteile an Wasser verbunden.

Die Erfindung soll durch nachfolgende Beispiele verdeutlicht werden.

### Beispiele

Es wurden Grundierungen der folgenden Rahmen-Zusammensetzung untersucht:

| Grundierung A, nicht dehäsivierend | |
|---|---|
| 19 GT | Polyacrylat Dispersion, 50 Gew.-% FK, 0,1 µm |
| 8 GT | Polyacrylat Dispersion, 30 Gew.-% FK, 0,02-0,03 µm |
| 2 GT | Alkoholethoxylate bzw. Emulgatoren |
| 1,7 GT | Filmbildungshilfsmittel |
| 0,05 GT | Entschäumer |
| 69,25 GT | Wasser |
| 100 GT | |

| Grundierung B, dehäsivierend | |
|---|---|
| 8 GT | Polyacrylat-Dispersion, 38 Gew.-% FK, 0,03 µm, |
| 26 GT | Polyacrylat-Dispersion, 22 Gew.-% FK, < 0,1 µm, |
| 6 GT | anionische Polyurethan-Dispersion, 5 Gew.-% FK, |
| 17 GT | Paraffin, 42 Gew.-%, |
| 4 GT | Alkoholethoxylate bzw. Emulgatoren |
| 1 GT | Xanthan Gum |
| 38 GT | Wasser |
| 100 GT | |

Angaben in µm betreffen die Teilchengröße (ca.-Angaben)
- GT: = Gewichtsteile
- FK: = Festkörpergehalt

### Test auf Oberflächenverfestigung

- **Arbeitsmaterialien:**: a) 100 cm² Eternitplatte
b) Grundierung
c) Flachpinsel (1 Zoll)
d) eine schwach abgebundene Leimfarbe
- **Rezeptur der Leimfarbe:**: 98 % Kreide
2 % CMC (Carboxymethylcellulose)
(Viskositätsstufe: 2 %ig, ca. 50 mPas)

### Ausführung:

Die Leimfarbe wurde im Ansatzverhältnis 1 Gew.-Teil Pulver zu 2 Gew.-Teilen Wasser angesetzt und ca. 24 Stunden stehen gelassen. Danach wurde sie kurz durchgerührt und mit einem Flachpinsel satt auf die Eternitplatten aufgetragen. Nach einer Trockenzeit von ca. 24 Stunden wurde auf den stark kreidenden Anstrich ebenfalls mit einem Flachpinsel die entsprechende Grundierung aufgetragen (ca. 1,5 - 2 g). Nach weiteren 24 Stunden wurde über die so behandelte Fläche ein Klebestreifen geklebt und mit einem kräftigen Ruck abgerissen. Beurteilt wurde anhand der auf dem Klebestreifen verbliebenen Kreidebestandteile. Zu jeder Begutachtung wurde eine unbehandelte Kreidefläche als Vergleichswert mit herangezogen werden. Beurteilt wurde nach folgendem System:
1 = sehr gut,
2 = gut
3 = befriedigend
4 = keine meßbare Wirkung

### Test auf Tiefenwirkung

Zunächst wurden die Testflächen (Gipsstreifen) wie folgt hergestellt:
Größe (10 cm x 2 cm x 1,5 cm)
Gipsmasse (Knauf-Rotband) 1 Gewichtsteil Gips zu 0,6 Gewichtsteilen Wasser
Die Gipsmasse wurde nach dem Anrühren in eine, der späteren Größe entsprechenden Form gegossen und anschließend getrocknet (bei Raumtemperatur). Nach einer Lagerzeit von ca. 3 Wochen kann der Tiefenwirkungstest durchgeführt werden. Hierzu wird 0,1 ml der zu prüfenden Substanz mittels einer Eppendorfpipette auf dem jeweiligen Gipsstreifen aufgetropft und dann 24 Stunden bei Raumtemperatur belassen. Danach wird der Prüfkörper an der Stelle, wo die Substanz aufgebracht worden war, durchgebrochen und die Innenseiten mit blauer Tinte bestrichen. Aus den verschiedenen Farbschattierungen der Tinte ist die Eindringtiefe (=Tiefenwirkung) der jeweiligen Grundierung festzustellen.

### Test auf Stripfähigkeit

Mit Stripfähigkeit ist hier die Wiederablösbarkeit eines Wandbelages vom Untergrund bezeichnet. Bei diesem Test wurde ein Gipsputzuntergrund mit der Grundierung B unter Variation der Alkoholethoxylate bzw. Emulgatoren vorbehandelt. Es wurden Wandbeläge mit einem Normalkleister (Metylan^{(R)}, Ansatzverhältnis mit Wasser 2 : 1) und einem Spezialkleister (Metylan ^{(R)} spezial, Ansatzverhältnis mit Wasser 1 : 1)) verklebt. Die Stripfähigkeit wurde mit gut (+) bewertet, wenn sich der Wandbelag nach Trocknung der Klebung ohne zu zerreißen vom Untergrund abziehen ließ.

### Ergebnisse

Bei folgenden Beispielen wurde von Grundierung A ausgegangen unter Variation der Alkoholethoxylate bzw. Emulgatoren:

| Beispiel | Alkoholethoxylat bzw. Emulgator | Test auf Oberflächenverfestigung | Test auf Tiefenwirkung | Aufstrich auf Eternit |
|---|---|---|---|---|
| 1 | Dodecylbenzolsulfonat-Na-Salz | 3-4 | 3 mm | - |
| 2 | C_{12/14} + 4 EO | 4 | 3,5 mm | + |
| 3 | C₁₂₋₁₆ + 4 EO | 4 | 3 mm | + |
| 4 | C₁₂₋₁₄ + 5 EO + 4 PO | 4 | 3 mm | + |
| 5 | C_{16/18} + 30 EO | 3 | 3,5 mm | + |

### Beispiele 1 bis 4 nicht erfindungsgemäß.

Der Aufstrich auf Eternit wurde visuell begutachtet und ist ein Maß für die Verträglichkeit der Grundierung mit schwach saugenden Untergründen.

Bei folgenden Beispielen wurde von Grundierung B ausgegangen unter Variation der Alkoholethoxylate bzw. Emulgatoren:

| Beispiel | Alkoholethoxylat bzw. Emulgator | Test auf Oberflächenverfestigung | Test auf Tiefenwirkung | Test auf Stripfähigkeit | |
|---|---|---|---|---|---|
| | | | | Normal- | Spezial- |
| | | | | kleister | |
| 6 | Wasser (= kein Emulgator) | 4 | keine | | |
| 7 | C_{12/14} + 4 EO | 4 | keine | + | + |
| 8 | C₁₂₋₁₆ + 4 EO | 4 | keine | +/- | - |
| 9 | C_{16/18} + 5 EO | 3 | keine | | |
| 10 | C_{16/18} + 30 EO | 1-2 | 3-4 mm | + | + |
| 11 | C_{16/18} + 80 EO | 2-3 | 2 mm | | |
| 12 | C_{16/18} + 30 EO und C_{16/18} + 80 EO im Verhältnis 1 : 1 | 1 | 4-5 mm | + | + |

### Beispiele 6 bis 9 nicht erfindungsgemäß.

Bei allen vorstehenden Beispielen haben die Eintragungen in der Spalte Alkoholethoxylate folgende exemplarisch erläuterte Bedeutung:
- C₁₂₋₁₆: Alkoholkomponente mit einer linearen, geradzahligen Kette mit 12 bis 16 C-Atomen
- + 4 EO + 5 PO: alkoxyliert mit im Mittel 4 Einheiten Ethylenoxid (EO) und 5 Einheiten Propylenoxid (PO).

## Patentansprüche

1. Tiefenwirksame Grundierung mit oberflächenverfestigenden Eigenschaften auf Basis feinteiliger wäßriger Polymerdispersionen, dadurch gekennzeichnet, daß
- Alkoholethoxylate mit 12 bis 20 C-Atomen in dem vom Alkohol gebildeten Molekülteil und einem mittleren Ethoxylierungsgrad von 7 bis 120 in einer Menge von 5 bis 80 Gew.-%, bezogen auf den Festkörpergehalt, sowie
- gewünschtenfalls dehäsivierende Zusätze
enthalten sind.

2. Tiefenwirksame Grundierung nach Anspruch 1, dadurch gekennzeichnet, daß 10 bis 30 Gew.-% Alkoholethoxylate, jeweils bezogen auf den Festkörpergehalt, enthalten sind.

3. Tiefenwirksame Grundierung nach Ansprüchen 1 und 2, dadurch gekennzeichnet, daß der vom Alkohol gebildete Molekülteil der Ethoxylate eine lineare, vorzugsweise gesättigte Struktur aufweist.

4. Tiefenwirksame Grundierung nach Ansprüchen 1 bis 3, dadurch gekennzeichnet, daß der vom Alkohol gebildete Molekülteil der Ethoxylate eine geradzahlige Anzahl an C-Atomen, vorzugsweise C₁₆ und/oder C₁₈, enthält.

5. Tiefenwirksame Grundierung nach einem der vorstehenden Ansprüche, dadurch gekennzeichnet, daß der mittlere Ethoxylierungsgrad 10 bis 100, vorzugsweise 20 bis 80, beträgt.

6. Tiefenwirksame Grundierung nach einem der vorstehenden Ansprüche, dadurch gekennzeichnet, daß Alkoholethoxylate enthalten sind, die bis mindestens 25 °C, vorzugsweise jedoch bis 30 °C oder darüber, fest sind.

7. Tiefenwirksame Grundierung nach einem der vorstehenden Ansprüche, dadurch gekennzeichnet, daß sie als dehäsivierende Zusätze Paraffine, Silikone und/oder natürliche Fette emulgiert enthält.

8. Tiefenwirksame Grundierung nach einem der vorstehenden Ansprüche, dadurch gekennzeichnet, daß 10 bis 60 Gew.-%, bezogen auf die nichtwäßrigen Anteile, dehäsivierende Zusätze enthalten sind.

9. Tiefenwirksame Grundierung nach einem der vorstehenden Ansprüche, dadurch gekennzeichnet, daß dispergierte Polymerteilchen enthalten sind, die zur Filmbildung befähigt sind.

10. Tiefenwirksame Grundierung nach einem der vorstehenden Ansprüche, dadurch gekennzeichnet, daß die dispergierten Polymerteilchen zum zumindest überwiegenden Teil aus
- Homo- und/oder Copolymerisaten auf (Meth)Acrylatbasis und/oder
- Polyurethanen mit zur Salzbildung befähigten funktionellen Gruppen
bestehen.

11. Tiefenwirksame Grundierung nach einem der vorstehenden Ansprüche, dadurch gekennzeichnet, daß die wäßrigen Polymerdispersionen Teilchen verschiedener Größenordnung enthalten, wobei die größeren im Mittel bei 0,1 µm oder darüber und die kleineren im Mittel bei 0,05 µm oder darunter liegen.

12. Tiefenwirkame Grundierung nach einem der vorstehenden Ansprüche, dadurch gekennzeichnet, daß zumindest 3 Gew.-% der dispergierten Polymerteilchen eine Größe von 0,05 µm und kleiner aufweisen.

13. Tiefenwirksame Grundierung nach einem der vorstehenden Ansprüche, dadurch gekennzeichnet, daß sie übliche Additive wie Lösungsmittel, Konservierungsmittel, Entschäumer, Farbstoffe und/oder Verdicker, letztere vorzugsweise nicht mehr als bis zu 10 Gew.-% bezogen auf Festkörpergehalt, enthält.

14. Tiefenwirksame Grundierung nach einem der vorstehenden Ansprüche, dadurch gekennzeichnet, daß sie
15 - 30 Gewichtsteile Polyacrylat-Dispersion mit 50 Gew.-% Festkörpergehalt und einer Teilchengröße von etwa 0,1 µm,
0 - 10 Gewichtsteile Polyacrylat-Dispersion mit 38 Gew.-% Festkörpergehalt und einer Teilchengröße von etwa 0,03 µm,
0 - 30 Gewichtsteile anionische Polyurethan-Dispersion mit 5 Gew.-% Festkörpergehalt
8 - 30 Gewichtsteile Paraffin-Emulsion mit einem Festkörpergehalt von 42 Gew.-%,
2 - 20 Gewichtsteile C₁₆/C₁₈-Alkoholethoxylat mit einem mittleren Ethoxylierungsgrad zwischen 30 und 80,
0 - 5 Gewichtsteile Additive sowie mindestens
25 Gewichtsteile Wasser
enthält.

## Claims

1. A deep-acting primer with surface-sealing properties based on fine-particle aqueous polymer dispersions, characterized in that it contains
- alcohol ethoxylates which contain 12 to 20 C atoms in that part of the molecule formed by the alcohol and have an average degree of ethoxylation of 7 to 120 in a quantity of 5 to 80% by weight, based on the solids content and
- if desired dehesivizing additives.

2. A deep-acting primer as claimed in claim 1, characterized in that it contains 10 to 30% by weight of alcohol ethoxylates, based on the solids content.

3. A deep-acting primer as claimed in claims 1 and 2, characterized in that that part of the ethoxylate molecule formed by the alcohol has a linear, preferably branched structure.

4. A deep-acting primer as claimed in claims 1 to 3, characterized in that that part of the ethoxylate molecule formed by the alcohol contains an even number of C atoms, preferably C₁₆ and/or C₁₈.

5. A deep-acting primer as claimed in any of the preceding claims, characterized in that the average degree of ethoxylation is 10 to 100 and preferably 20 to 80.

6. A deep-acting primer as claimed in any of the preceding claims, characterized in that it contains alcohol ethoxylates which are solid up to at least 25°C and preferably up to 30°C or higher.

7. A deep-acting primer as claimed in any of the preceding claims, characterized in that it contains paraffins, silicones and/or natural fats as dehesivizing additives.

8. A deep-acting primer as claimed in any of the preceding claims, characterized in that it contains 10 to 60% by weight, based on the non-aqueous components, of dehesivizing additives.

9. A deep-acting primer as claimed in any of the preceding claims, characterized in that it contains dispersed polymer particles capable of film formation.

10. A deep-acting primer as claimed in any of the preceding claims, characterized in that at least most of the dispersed polymer particles consist of
- (meth)acrylate-based homo- and/or copolymers and/or
- polyurethanes containing functional groups capable of salt formation.

11. A deep-acting primer as claimed in any of the preceding claims, characterized in that the aqueous polymer dispersions contain particles of various sizes, the larger particles being on average 0.1 µm or more in size and the smaller particles being on average 0.05 µm or less in size.

12. A deep-acting primer as claimed in any of the preceding claims, characterized in that at least 3% by weight of the dispersed polymer particles are 0.05 µm or less in size.

13. A deep-acting primer as claimed in any of the preceding claims, characterized in that it contains typical additives, such as solvents, preservatives, foam inhibitors, dyes and/or thickeners, preferably no more than up to 10% by weight of thickeners, based on the solids content.

14. A deep-acting primer as claimed in any of the preceding claims, characterized in that it contains
15 to 30 parts by weight of a polyacrylate dispersion with a solids content of 50% by weight and a particle size of around 0.1 µm,
0 to 10 parts by weight of a polyacrylate dispersion with a solids content of 38% by weight and a particle size of around 0.03 µm,
0 to 30 parts by weight of an anionic polyurethane dispersion with a solids content of 5% by weight,
8 to 30 parts by weight of a paraffin emulsion with a solids content of 42% by weight,
2 to 20 parts by weight of C_{16/18} alcohol ethoxylate with an average degree of ethoxylation of 30 to 80,
0 to 5 parts by weight of additives and
25 parts by weight of water.

## Revendications

1. Couche de fond à effet de pénétration avec des propriété durcissant les surfaces à base de dispersions de polymères aqueuses finement divisées, caractérisée en ce que sont contenus :
- des éthoxylates d'alcools avec de 12 à 20 atomes de carbone dans la partie de molécule formée par l'alcool et avec un degré d'éthoxylation moyen de 7 à 120 en une quantité de 5 à 80 % en poids, par rapport à la teneur en corps solide, ainsi que
- si on le désire des additifs anti-accrochants.

2. Couche de fond à effet de pénétration selon la revendication 1, caractérisée en ce que sont contenus 10 à 30 % en poids d'éthoxylates d'alcool, rapportés respectivement à la teneur en corps solides.

3. Couche de fond à effet de pénétration selon les revendications 1 et 2, caractérisée en ce que la partie de molécule des éthoxylates formée par l'alcool comporte une structure linéaire, de préférence saturée.

4. Couche de fond à effet de pénétration selon les revendications 1 à 3, caractérisée en ce que la partie de molécule des éthoxylates formée par l'alcool contient un nombre pair d'atomes de carbone, de préférence C₁₆ et/ou C₁₈.

5. Couche de fond à effet de pénétration selon une des revendications précédentes, caractérisée en ce que le degré moyen d'éthoxylation se situe de 10 à 100, de préférence de 20 à 80.

6. Couche de fond à effet de pénétration selon une des revendications précédentes, caractérisée en ce que sont contenus des éthoxylates, qui sont solides jusqu'à au moins 25°C, de préférence toutefois jusqu'à 30°C ou plus.

7. Couche de fond à effet de pénétration selon une des revendications précédentes, caractérisée en ce qu'elle contient comme additifs d'adhésivité émulsionnés des paraffines, des silicones et/ou des graisses naturelles.

8. Couche de fond à effet de pénétration selon une des revendications précédents, caractérisée en ce que sont contenus 10 à 60 % en poids, par rapport aux parties non aqueuses, d'additifs d'adhésivité.

9. Couche de fond à effet de pénétration selon une des revendications précédentes, caractérisée en ce que sont contenues des particules de polymères dispersées qui sont aptes à la formation d'un feuil.

10. Couche de fond à effet de pénétration selon une des revendications précédentes, caractérisée en ce que les particules de polymères dispersées sont composées au moins pour la partie prépondérante de :
- homo- et/ou copolymères à base de (méth)acrylates et/ou de
- polyuréthanes avec des groupes fonctionnels capables de former des sels

11. Couche de fond à effet de pénétration selon une des revendications précédentes, caractérisée en ce que les dispersions de polymères aqueuses contiennent des particules d'ordre dimensionnel différent, parmi lesquelles les plus grandes se situent en moyenne à 0,1 mm ou au-dessus, et les plus petites en moyenne à 0,05 mm ou en dessous.

12. Couche de fond à effet de pénétration selon une des revendications précédentes, caractérisée en ce qu'au moins 3 % en poids de particules de polymères dispersées ont une taille de 0,05 µm et inférieure.

13. Couche de fond à effet de pénétration selon une des revendications précédentes, caractérisée en ce qu'elle contient des additifs visuels comme des solvants, agents de conservation, agents antimoussant, colorants et/ou épaississants, ces derniers de préférence pas plus de 10 % en poids, rapporté à la teneur en corps solide.

14. Couche de fond à effet de pénétration selon une des revendications précédentes, caractérisée en ce qu'elle contient :
15 - 30 parties en poids de dispersion de polyacrilates avec 50 % en poids de contenu en corps solides et une taille de particules d'environ 0,1 µm,
0 - 10 parties en poids de dispersion de polyacrilates avec 38 % en poids de teneur en corps solides et une taille de particules d'environ 0,03 µm,
0 - 30 parties en poids de dispersion anionique de polyuréthannes avec 5 % en poids de teneur en corps solides,
8 - 30 parties en poids d'émulsion de paraffine avec une teneur de 42 % en poids en corps solides,
2 - 20 parties en poids d'éthoxylate d'alcool en C₁₆/C₁₈ avec un degré d'éthoxylation moyen compris entre 30 et 80,
0 - 5 parties en poids d'additifs ainsi qu'au moins,
25 parties en poids d'eau.
